# FASCICULE DE BREVET EUROPEEN

(11) **EP 2 760 986 B1**
(45) Date de publication et mention de la délivrance du brevet: **04.12.2019**
(21) Numéro de dépôt: 12775806.8
(22) Date de dépôt: 01.10.2012
(51) Int. Cl.: C12G 1/02

(54) **PROCEDE DE PREPARATION D'UN PRODUIT ALIMENTAIRE LIQUIDE ENRICHI EN OLIGOSACCHARIDES ET EN POLYSACCHARIDES**
VERFAHREN ZUR HERSTELLUNG EINES MIT OLIGOSACCHARIDEN ANGEREICHERTEN FLÜSSIGEN NAHRUNGSMITTELPRODUKTES UND MIT POLYSACCHARIDEN
PROCESS FOR PREPARING A LIQUID FOOD PRODUCT ENRICHED WITH OLIGOSACCHARIDES AND WITH POLYSACCHARIDES

(30) Priorité: 30.09.2011 FR 1158819
(43) Date de publication de la demande: 06.08.2014
(73) Titulaire: Institut National de la Recherche Agronomique (INRA), 75007 Paris (FR); PERA-PELLENC SA, 34510 Florensac (FR)
(72) Inventeur: ESCUDIER, Jean-Louis, 11110 Armissan (FR); MIKOLAJCZAK, Michel, 11430 Gruissan (FR); FAVAREL, Jean-Luc, 81800 Rabastens (FR); WILLIAMS, Pascale, 34070 Montpellier (FR); DOCO, Thierry, 34880 Laverune (FR)
(74) Mandataire: Jacobacci Coralis Harle
(86) Numéro de dépôt international: PCT/FR2012/052224
(87) Numéro de publication internationale: WO 2013/045865

(56) Documents cités:
- FR-A1- 2 826 665
- US-A- 6 103 506
- THIERRY DOCO ET AL: "Effect of Flash Release and Pectinolytic Enzyme Treatments on Wine Polysaccharide Composition", JOURNAL OF AGRICULTURAL AND FOOD CHEMISTRY, vol. 55, no. 16, 1 août 2007 (2007-08-01), pages 6643-6649, XP055022460, ISSN: 0021-8561, DOI: 10.1021/jf071427t
- MARIE-AGNÈS DUCASSE ET AL: "Effect of Macerating Enzymes on the Oligosaccharide Profiles of Merlot Red Wines", JOURNAL OF AGRICULTURAL AND FOOD CHEMISTRY, vol. 59, no. 12, 22 juin 2011 (2011-06-22) , pages 6558-6567, XP055022453, ISSN: 0021-8561, DOI: 10.1021/jf2003877
- DATABASE WPI Week 197821 Thomson Scientific, London, GB; AN 1978-38024A XP002671911, & SU 563 434 A1 (VITICULT MAGARACH) 30 juin 1977 (1977-06-30)
- BELLEVILLE M P ET AL: "A linear arabinan from a red wine", PHYTOCHEMISTRY, PERGAMON PRESS, GB, vol. 33, no. 1, 29 avril 1993 (1993-04-29) , pages 227-229, XP026632971, ISSN: 0031-9422, DOI: 10.1016/0031-9422(93)85429-U [extrait le 1993-04-29]
- VIDAL S ET AL: "The polysaccharides of red wine: total fractionation and characterization", CARBOHYDRATE POLYMERS, APPLIED SCIENCE PUBLISHERS, LTD. BARKING, GB, vol. 54, no. 4, 1 décembre 2003 (2003-12-01), pages 439-447, XP004471185, ISSN: 0144-8617, DOI: 10.1016/S0144-8617(03)00152-8

## Description

### Domaine technique de l'invention

L'invention se rapporte au domaine de la préparation des produits alimentaires liquides à partir de baies et, en particulier, au domaine de la préparation de jus de raisin et moûts de raisin utilisables en vinification en phase liquide, en l'absence des baies de raisin pendant la phase fermentaire..

### Etat de la technique

Les procédés traditionnels de vinification en rouge sont basés sur la mise en œuvre des étapes suivantes : (i) l'éraflage et le foulage des baies de raisins, (ii) la fermentation alcoolique et la macération pelliculaire pendant la fermentation en cuve et (iii) l'écoulage et le pressage qui permettent d'obtenir respectivement le vin de goutte et le vin de presse.

L'étape de fermentation et de macération pelliculaire est une étape clé du procédé de vinification en rouge au cours de laquelle le vin acquiert son intensité colorante et sa structure aromatique grâce à la diffusion des pigments (anthocyanes) et des tannins, depuis la pellicule des baies de raisin vers le jus de fermentation. Cette étape dure plusieurs jours voire plusieurs semaines et ne permet d'extraire tout au plus que 50% des composés phénoliques initiaux. L'alcool produit par la fermentation permet au cours de celle-ci d'extraire progressivement les composés qualitatifs de la baie de raisin (composés polyphénoliques d'une part, polysaccharidiques d'autre part)

Depuis plus de trente ans, les vinificateurs se sont efforcés de développer des méthodes alternatives à la macération pelliculaire pendant la fermentation afin d'optimiser l'extraction des composés polyphénoliques. Ces méthodes sont généralement mises en œuvre avant la fermentation alcoolique des baies. Il a été ainsi proposé d'effectuer une macération préfermentaire à chaud des baies. Ce procédé consiste à chauffer les baies à une température d'environ 70 °C pendant plusieurs heures. Un procédé alternatif est le procédé « cell cracking » qui consiste à comprimer les baies de raisin à une pression comprise entre 20 et 60 bars puis à détendre les baies à pression atmosphérique. Enfin, il a été également proposé le procédé « flash détente » qui consiste à soumettre une vendange chauffée à une température d'environ 85°C-95°C à une mise sous vide instantanée à une pression d'environ 50-60 mbar absolus. Le procédé flash détente, décrit entre autres dans le brevet EP0728189, s'est révélé être le procédé le plus adapté pour améliorer l'extraction des composés polyphénoliques présents à l'origine dans la pellicule des raisins pendant la phase de fermentation pelliculaire sur marc. Cette technologie est à l'heure actuelle largement utilisée par les caves viticoles aussi bien en Europe qu'en Amérique du Sud.

L'homme du métier dispose donc à l'heure actuelle de méthodes particulièrement performantes pour l'obtention de jus et vins présentant des teneurs en polyphénols et une intensité élevées.

Les pigments et les tannins sont souvent décrits comme les composés responsables des qualités organoleptiques du vin. Néanmoins, plusieurs études ont montré que d'autres classes de composés chimiques participent de manière significative aux propriétés organoleptiques des vins. Il a été ainsi montré que certains polysaccharides (en particulier le rhamnogalacturonane de type II ou RGII) diminue l'astringence des tanins. Il est également connu que les oligosaccharides et les polysaccharides participent à la stabilisation et au maintien de l'intensité colorante des vins au cours du temps. Ces composés sont également impliqués dans les propriétés en bouche des vins. Il a été aussi montré que les polysaccharides et les oligosaccharides dérivés des pectines possèdent une grande variété d'activités pharmacologiques dont des propriétés d'immunostimulation, anti-métastatique et d'hypo-cholestérolémiant (Yamada, 1996, Progress in Biotechnology, 14, 173-190). Les oligosaccharides ont aussi un effet bénéfique sur la santé (Qiang et al., 2009, Carb. Polymers, 77, 435-44). Ils sont classés parmi les fibres solubles, ils faciliteraient ainsi le transit intestinal, et activeraient la fermentation dans le colon (Elleuch et al.,2011, Food Chemistry, 124, 411-421), mais ils pourraient avoir un rôle important dans les jus de fruits et boissons dérivées de part leurs propriétés physico-chimiques telles que la chélation des cations (Cescutti, & Rizzo, 2001, Journal of Agricultural and Food Chemistry, 2001, 49, 3262-3267) En dépit de l'impact direct de la teneur en polysaccharides et en oligosaccharides sur les propriétés organoleptiques des vins et jus de raisins ainsi que sur la santé, les études visant à optimiser leur extraction restent limitées.

Doco et al (J. Agr. Food Chem, 2007, 55, 6643-6649) compare l'effet de différents traitements de vinification avec ou sans étape de thermotraitement. Les auteurs concluent que l'association d'une étape de flash détente et de macération enzymatique suivi d'un pressurage après la fermentation, conduit à une diminution des polysaccharides totaux présents dans le vin, par rapport à un contrôle ayant subi uniquement une étape de fermentation pelliculaire, ou par rapport à un vin obtenu en effectuant une étape de flash détente avant la fermentation pelliculaire.

Il existe donc à l'heure actuelle un besoin pour de nouveaux procédés permettant la préparation de jus de raisin et de vins enrichis en oligosaccharides et en polysaccharides compatible avec une fermentation en phase liquide, comme c'est pratiqué pour élaborer des vins blancs.

### Résumé de l'invention

L'invention concerne un procédé de préparation d'un produit alimentaire liquide enrichi en oligosaccharides et en polysaccharides à partir de baies comprenant les étapes successives suivantes:
(a) une étape de chauffage des baies à une température allant de 40°C à 100°C,
(b) une étape de mise sous vide des baies à une pression allant de 10³ à 3.10⁴ Pa, ladite étape de mise sous vide des baies étant réalisée, de préférence, directement à l'issue de l'étape (a),
(c) une étape de macération des baies par ensemencement d'une ou plusieurs enzymes pectolytiques choisies parmi le groupe constitué par les endo-polygalacturonases, les exo-polygalacturonases, des β-galactosidases, les rhamnogalacturonases, des pectine-estérases, les pectine-méthyl estérases et les pectine-lyases, à une température de 30°C à 65°C, laquelle étape de macération (c) est effectuée sur une durée de 10 min à 10h, en l'absence de fermentation alcoolique, et
(d) une étape finale de récupération du produit alimentaire liquide.

Cette étape de récupération du produit liquide consiste en une séparation du jus des baies de raisin (par pressurage ou centrifugation) avant mise en fermentation éventuelle de celui-ci si l'objet est d'élaborer du vin.

Un objet supplémentaire de l'invention est un produit alimentaire liquide enrichi en polysaccharides et en oligosaccharides obtenu par le procédé de préparation selon l'invention, lequel produit alimentaire liquide présente un taux d'alcool inférieur à 0,5% vol.

L'invention a également pour objet une méthode de préparation d'un vin, de préférence un vin rouge, caractérisé en ce qu'il comprend une étape de vinification, avec fermentation alcoolique, en phase liquide d'un produit alimentaire liquide tel que défini précédemment ou d'un produit alimentaire liquide obtenu selon le procédé de l'invention.

### Figure

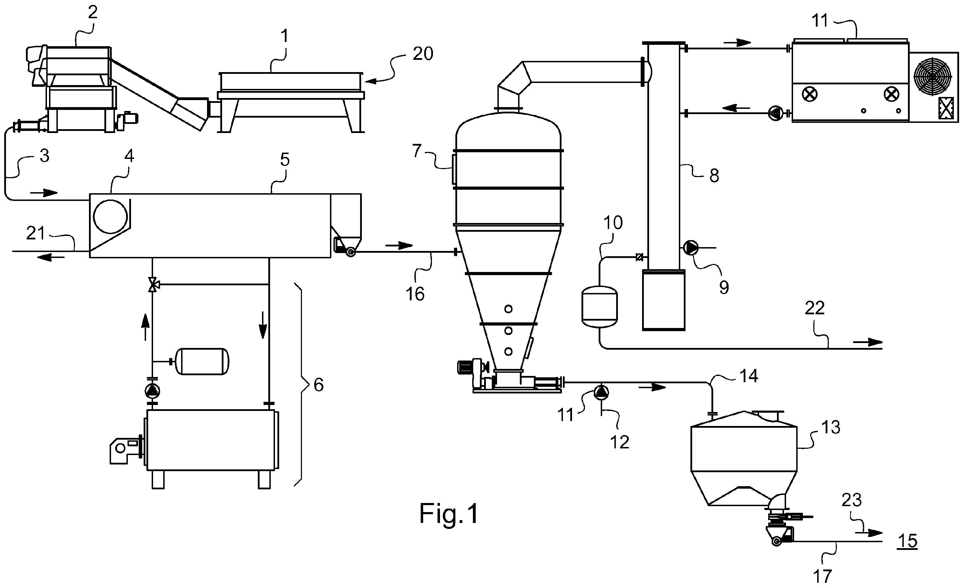

La figure 1 représente une installation adaptée à la mise en oeuvre du procédé de préparation d'un produit alimentaire liquide selon l'invention. L'installation comprend un dispositif (1) permettant la réception de la vendange (20) qui est connecté à un égrappoir (2). Depuis l'égrappoir (2), la vendange (20) est acheminée par un moyen adapté (3) à un égouttoir (4). Le jus d'égouttage (21) est récupéré en sortie de l'égouttoir (4). Le jus d'égouttage peut être éliminé ou ajouté au jus obtenu à l'issue du procédé. Les baies égouttées sont chauffées dans la chambre de chauffage (5) qui est connectée à une chaudière (6). En sortie de la chambre de chauffage (5), les baies chauffées sont acheminées par un moyen adapté (16) à la chambre de détente (7). La chambre de détente (7) est connectée à un condenseur (8). Le condenseur (8) est relié à une tour aéroréfrigérante (11) et à une pompe à vide (9). Le moyen (10) permet de récupérer les condensats (22) en sortie du condenseur (8). Dans le mode de réalisation illustré à la figure 1, les condensats (22) peuvent être éliminés et ne sont donc pas obligatoirement réintroduits dans le produit final. En sortie de la chambre de détente (7), les baies sont acheminées par un conduit adapté (14) à la cuve de macération (13). La préparation enzymatique à activité pectolytique (12) est ajoutée aux baies au niveau de la conduite (14) par un moyen d'injection adapté (11). Après un temps de séjour adapté dans la cuve de macération, les baies traitées (23) sont acheminées vers un pressoir (15) par un conduit (17).

### Description détaillée de l'invention

Le Demandeur a réalisé de longues recherches afin de concevoir un procédé de vinification en phase liquide permettant l'obtention de vins rouges présentant des qualités organoleptiques améliorées. Le Demandeur a recherché l'obtention de vins rouges équilibrés

présentant une teneur en polyphénols et une intensité colorante élevées. Le Demandeur s'est également efforcé à développer un moyen pour augmenter la teneur en oligosaccharides et en polysaccharides des vins, ces composés étant connus pour participer aux qualités organoleptiques, nutritionnelles et aux propriétés bénéfiques des vins sur la santé. Or, à la connaissance du Demandeur, les procédés connus de vinification en phase liquide ont conduit généralement à l'obtention de vins rouges présentant des teneurs faibles (inférieures à celles obtenues lorsque la fermentation est réalisée en présence des pellicules) en polysaccharides et en oligosaccharides.

Dans cette optique, le Demandeur a conçu un procédé permettant l'obtention de jus de raisin qui, à la fois, sont utilisables en vinification en phase liquide et présentent des teneurs élevées en polysaccharides et en oligosaccharides. Ce procédé comprend une étape de traitement des baies de raisin par flash détente couplée à une étape subséquente de macération pré-pressurage et préfermentaire des baies en présence d'enzymes pectolytiques. L'étape de flash détente des baies de raisin comprend elle-même deux sous-étapes, à savoir, (i) le chauffage des baies sur une durée de quelques minutes à une température allant de 40°C à 100°C suivi immédiatement par (ii) la mise sous vide des baies chauffées à une pression allant généralement de 10³ à 3.10⁴ Pa. La mise sous vide instantanée des baies chauffées provoque une vaporisation partielle de l'eau contenue dans les baies conduisant à une déstructuration de la matrice tissulaire. Cette déstructuration cellulaire permet une extraction accrue des composés d'intérêt organoleptiques.

Le Demandeur a montré que le traitement subséquent des baies par macération à l'aide d'enzymes pectolytiques permet de potentialiser l'extraction des polysaccharides et des oligosaccharides présents initialement au niveau des parois cellulaires des baies de raisin. Le Demandeur a ainsi montré que le couplage d'une étape de flash détente et d'une étape de macération à l'aide d'enzymes pectolytiques permet d'obtenir des jus de raisins présentant des teneurs en polysaccharides et en oligosaccharides élevées combinées à une teneur en polyphénols et une intensité colorante élevées.

De manière générale, l'étape de macération des baies à l'aide d'enzymes pectolytiques est mise en œuvre après l'étape de flash détente et avant toute étape de pressurage destinée à séparer le jus des baies du marc.

De manière tout à fait surprenante, le Demandeur a observé que son procédé permet d'obtenir des jus de raisin présentant des teneurs en oligosaccharides et en polysaccharides bien supérieures à celles des jus obtenus par des méthodes traditionnelles d'extraction telles que le thermotraitement ou les procédés mettant en œuvre la seule technologie flash détente (mais en l'absence d'une macération enzymatique pré-pressurage des baies).

De manière tout autant surprenante, le Demandeur a également montré l'existence d'un effet synergique résultant de l'association de l'étape de flash détente des baies de raisin et de l'étape subséquente de macération des baies de raisin sur la teneur en polysaccharides et oligosaccharides des jus finals. Un tel effet de synergie n'est pas observé à ce niveau lorsque l'on combine une étape de thermotraitement classique des vendanges avec une étape subséquente de macération à l'aide d'enzymes pectolytiques.

Le couplage d'une étape de flash détente avec une étape de macération pré-pressurage à l'aide d'enzymes pectolytiques permet ainsi d'obtenir des jus de raisin à partir du cépage teinturier (l'alicante) présentant une teneur en polysaccharides généralement d'au moins 600 mg/L et notamment de 600 à 700 mg/L et une teneur en oligosaccharides généralement d'au moins 500 mg/L et notamment comprise entre 500 et 1000 mg/L. De manière remarquable, la teneur en polysaccharide rhamnogalacturonane II (RGII) des jus finals est comprise entre 200 et 300 mg/L, ce qui est bien supérieur à celui que l'on observe généralement pour les moûts pour lesquels la teneur en RGII est inférieure à 50 mg/L. De manière surprenante, les teneurs en RGII observées pour les jus de raisin obtenus par le procédé selon l'invention sont également bien supérieures à celles observées pour des vins rouges obtenus par vinification en phase solide (c'est-à-dire par macération fermentaire sur marc) qui comprennent généralement des teneurs en RGII de 100 à 150 mg/l.

Le Demandeur est d'avis que les jus de raisin obtenus par le procédé ci-dessus décrit qui comprend une étape de flash détente des baies de raisin suivie d'une étape de macération à l'aide d'enzymes pectolytiques sont particulièrement adaptés pour la préparation de vins par fermentation en phase liquide. Sans vouloir être lié par une quelconque théorie, le Demandeur est d'avis qu'en raison de leurs teneurs en polysaccharides et en oligosaccharides élevées, la fermentation des jus de raisins obtenus selon le procédé ci-dessus mentionné permet d'obtenir des vins présentant des qualités organoleptiques élevées - en particulier en ce qui concerne la sensation de corps et le volume en bouche - combinés à des qualités nutritionnelles améliorées.

Le Demandeur pense que le procédé de préparation de jus de raisin ci-dessus mentionné - qui comprend une étape de flash détente des baies de raisin puis leur macération en présence d'enzymes pectolytiques - peut être utilisé pour l'obtention de jus enrichis en polysaccharides et en oligosaccharides à partir de n'importe quel type de baies autres que les baies de raisin dans la mesure où la pellicule des baies est constituée en grande partie par de la pectine. Toutes les baies de raisin peuvent donc convenir pour la mise en œuvre du procédé selon la présente invention, en particulier, les baies de raisins rouges permettant l'obtention de vins rouges.

Ainsi, l'invention concerne un procédé de préparation d'un produit alimentaire liquide enrichi en oligosaccharides et en polysaccharides à partir de baies

Au sens de l'invention, on entend par « polysaccharide » un polymère linéaire ou ramifiés comprenant au moins 11 résidus osidiques liés entre eux par des liaisons osidiques.

Au sens de l'invention, on entend par « oligosaccharide », une molécule comprenant un enchaînement de 2 à 10 résidus osidiques liés entre eux par des liaisons osidiques.

Les fractions polysaccharidiques des vins rouges et des jus de raisin comprennent généralement des polysaccharides riches en arabinose et en galactose (PRAG) et des rhamnogalacturonanes (RGI et RGII). Les fractions oligosaccharidiques des vins rouges et des jus de raisin comprennent, quant à elle, généralement des oligosaccharides constitués par des sucres choisis parmi le rhamnose, l'arabinose, le galactose, le xylose, l'acide glucuronique et l'acide galacturonique.

Dans le contexte de la présente invention, un produit alimentaire liquide enrichi en oligosaccharides et en polysaccharides signifie que le produit alimentaire obtenu à l'issue du procédé selon l'invention présente :
▪ une teneur en polysaccharides au moins égale à 1,2 fois, de préférence au moins égale à 1,5 fois, la teneur en polysaccharides d'un produit alimentaire liquide de référence obtenu sur une même qualité de baie par un procédé similaire à celui de l'invention mais qui ne comprend pas l'étape (c) de macération enzymatique et
▪ une teneur en oligosaccharides au moins égale à 1,2 fois, de préférence au moins égale à 1,5 fois, la teneur en oligosaccharides d'un produit alimentaire liquide obtenu par un procédé similaire à celui de l'invention mais qui ne comprend pas l'étape (c) de macération enzymatique.

Une première teneur au moins égale à 1,2 fois une seconde teneur englobe une teneur au moins égale à 1,4, à 1,6, à 1,8, à 2,0, à 2,2, à 2,4, à 2,6, à 2,8, 3,0 fois une seconde teneur.

Le produit alimentaire liquide de référence est le produit obtenu :
(i) à partir d'une matière première identique à celle utilisée pour l'obtention du produit alimentaire selon l'invention et
(ii) par la mise en œuvre de l'ensemble des étapes ayant conduit à l'obtention du produit alimentaire selon l'invention à l'exception de l'étape de macération enzymatique (c).

Les teneurs en polysaccharides et en oligosaccharides du produit alimentaire liquide peuvent être obtenues selon des méthodes bien connues de l'homme du métier. Comme cela est illustré dans les exemples, la teneur en polysaccharides du produit alimentaire liquide peut être déterminée selon la méthode décrite par Vidal et al. (Carbohydrate Polymers, 2003, 54,1, 439-447). Cette méthode est basée sur la quantification par GC-MS des résidus glycosidiques caractéristiques obtenus après hydrolyse acide, réductions et dérivatisations des fractions d'intérêt provenant dudit produit alimentaire. La teneur en oligosaccharides du produit alimentaire liquide est quant à elle déterminée par analyse GC-MS des dérivés triméthylsilylés obtenus par méthanolyse des oligosaccharides (Doco et al., 2001, Polymers, 46, 249-259). Les teneurs en oligosaccharides et en polysaccharides peuvent être exprimées en mg de composés par litre de produit alimentaire liquide.

Comme cela est illustré dans les exemples, le procédé selon l'invention permet d'augmenter de manière très significative la teneur en polysaccharides rhamnogalacturonane Il (RGII). Ainsi, dans certains modes de réalisation, le procédé selon l'invention permet d'obtenir un produit alimentaire liquide enrichi en RGII, c'est-à-dire présentant une teneur au moins égale à 1,2 fois, de préférence 1,5 fois, celle d'un produit alimentaire liquide de référence obtenu par un procédé analogue à celui de l'invention mais ne comprenant pas l'étape (c) de macération enzymatique.

Dans certains modes de réalisation, comme cela est illustré dans les exemples, le procédé selon l'invention peut permettre l'obtention d'un produit alimentaire liquide ayant :
▪ une teneur en polysaccharides égale à au moins 1,5 fois celle du produit alimentaire liquide de référence,
▪ une teneur en RGII au moins égale à 4 fois celle du produit alimentaire liquide de référence et
▪ une teneur en oligosaccharides au moins égale à 2 fois celle du produit alimentaire liquide de référence.

Plus précisément, l'invention a pour objet un procédé de préparation d'un produit alimentaire liquide enrichi en oligosaccharides et en polysaccharides à partir de baies comprenant les étapes successives suivantes:
(a) une étape de chauffage des baies à une température allant de 40°C à 100°C,
(b) une étape de mise sous vide des baies à une pression allant de 10³ à 3.10⁴ Pa, ladite étape de mise sous vide des baies étant réalisée, de préférence, directement à l'issue de l'étape (a),
(c) une étape de macération des baies par ensemencement d'une ou plusieurs enzymes pectolytiques, et
(d) une étape finale de récupération du produit alimentaire liquide.

A toute fin utile, on précise que la combinaison des étapes (a) et (b) correspond à l'étape dite « flash détente » ci-dessus mentionnée.

Dans les modes préférés de réalisation du procédé selon l'invention, les étapes (a), (b) et (c) du procédé sont effectués avant toute étape de pressurage des baies c'est-à-dire toute étape au cours de laquelle les baies sont mécaniquement pressées afin d'en extraire le jus.

Cette étape de pressurage est alors effectuée après l'étape c et avant l'étape d; elle permet d'éliminer les résidus solides tels que les pellicules et les pépins des baies, notamment des grains de raisin, pour recueillir le jus liquide des baies, essentiellement exempt de particules solides, et ce avant toute étape fermentaire s'il s'agit de faire du vin.

Dans l'étape (a) du procédé selon l'invention, les baies sont chauffées à une température allant de 40°C à 100°C, de préférence, à une température allant de 70°C à 100°C, sur une période de quelques minutes à quelques dizaines de minutes.

Une température allant de 40°C à 100°C englobe une température de 40, 45, 50, 55, 60, 65, 70, 75, 80, 82, 84, 86, 87, 88, 89, 90, 91, 92, 93, 94, 94, 95, 96, 97, 98, 99, 100°C. Des températures de l'ordre de 65 à 95°C pourront par exemple être mises en œuvre.
En particulier, le chauffage des baies est effectué sur une durée allant de 1 à 30 minutes. Dans certains modes de réalisation, les baies sont amenées à la température désirée sur une durée de moins de 15 min, ce qui englobe une durée de moins de 14 min, de moins de 13 min, de moins de 12 min, de moins de 11 min, de moins de 10 min, de moins de 9 min, de moins de 8 min, de moins de 7 min, de moins de 6 min, de moins de 5 min, de moins de 4 min, de moins de 3 min.

Le chauffage des baies peut être réalisé par toute méthode connue de l'homme du métier. Dans certains modes de réalisation, le chauffage des baies est réalisé par une technique choisie parmi le groupe constitué par (i) le chauffage indirect des baies à l'aide d'un échangeur thermique, (ii) le chauffage des baies par immersion dans un liquide chaud, de préférence un moût, (iii) le chauffage des baies par un flux de vapeur, (iv) le chauffage ohmique des baies et (v) le chauffage par micro-onde des baies.

Le chauffage indirect des baies peut être réalisé par un échangeur thermique de tout type tel qu'un échangeur coaxial ou à surface raclée.

Lorsque les baies sont chauffées par un flux de vapeur, ledit flux de vapeur peut être obtenu à partir de jus ou de condensats provenant des baies et/ou des vapeurs condensées recueillies lors de la mise sous vide des baies à l'étape (b). Ce type de chauffage permet un chauffage rapide (généralement de 1 à 15 minutes) des baies à une température donnée et ceci en l'absence d'oxygène. Ainsi, le mode de chauffage par flux de vapeur permet un chauffage rapide et contrôlée des baies tout en limitant le développement des réactions d'oxydation qui ont un impact direct négatif sur les propriétés organoleptiques des vins finals.

Pour la mise en œuvre de l'étape de chauffage des baies, l'homme du métier pourra se référer à des articles de référence décrivant les différentes techniques de chauffage adaptées au chauffage des baies dans le cadre de la préparation de jus ou de vins, et en particulier, à l'article de synthèse d'Escudier et al., (Revue française d'œnologie, 2008, 229, 9-18).

L'homme du métier pourra également utiliser l'un des dispositifs commerciaux disponibles pour le chauffage des baies, et en particulier, l'échangeur dynamique coaxial commercialisé par la société Pera et le dispositif « thermocompact unit » commercialisé par la société Della Toffola.

Dans l'étape (b) du procédé selon l'invention, les baies échauffées sont soumises à une mise sous vide à une pression allant de 10³ à 3.10⁴ Pa. La mise sous vide des baies est généralement instantanée, c'est-à-dire que sa durée est de quelques fractions de seconde à tout au plus quelques secondes. La mise sous vide des baies provoque une évaporation partielle de l'eau contenue dans les baies accompagnée d'une diminution de la température des baies. La température obtenue à la fin de l'étape b sera par exemple inférieure à 70°C, notamment inférieure ou égale à 65°C, mais généralement supérieure à 28°C, notamment supérieure ou égale à 30°C.

La mise sous vide des baies peut être réalisée à l'aide d'une chambre de détente munie d'une pompe à vide et d'un condenseur qui permet de récupérer la vapeur émise par les baies au cours de leur mise sous vide.

Dans certains modes de réalisation, l'étape (a) du procédé comprend deux étapes successives :
▪ une étape de chauffage des baies à une température allant de 40°C à 100°C et
▪ une étape de macération des baies à la température optimisée pour la macération enzymatique par réglage du niveau de vide de façon à effectuer une refroidissement modéré de la vendange , notamment supérieur ou égale à 30°C et inférieur à 70°C.

L'étape de macération des baies est réalisée sans fermentation alcoolique substantielle des baies et peut être mise en œuvre au sein même de la chambre de chauffage. Il s'agit généralement d'une étape de macération rapide d'une durée allant de 1 min à 120 min, de préférence de 1 min à 60 min, ce qui englobe une étape de macération d'une durée de 60 min, 50 min, 40 min, 30 min, 25 min, 20 min, 15 min, 13 min, 11 min, 10 min, 9 min, 8 min, 7 min, 6 min, 5 min, 4 min, 3 min. Cette étape de macération thermique peut permettre d'améliorer l'extraction de certains composés d'intérêt comme les anthocyanes et les tannins. L'étape de chauffage des baies à une température allant de 40°C à 100°C est réalisée généralement en quelques minutes, de préférence en 1 min à 10 min.

La mise sous vide des baies entraîne un refroidissement des baies à une température adaptée pour la mise en œuvre de l'étape (c) de macération enzymatique. En d'autres termes, à l'issue de l'étape (b), les baies ont été refroidies à une température permettant la mise en œuvre directe de l'étape de macération enzymatique (c) sans refroidissement ou chauffage préalable des baies. Comme cela sera précisé ci-après, une température adaptée pour la mise en œuvre de l'étape de macération (c) est comprise dans une gamme allant de 30°C à 65°C.

Les vapeurs émises au cours de l'étape (b) peuvent être condensées et ré-incorporées dans les baies au cours de l'une quelconque des étapes du procédé, en particulier, au cours des étapes (a) et (c) du procédé selon l'invention, ou dans le produit final obtenu à l'étape (d).

Comme cela est illustré dans les exemples ci-après, le Demandeur a montré que les composés responsables des défauts aromatiques de type herbacé détectés dans les jus et vins finals peuvent être, en grande partie, éliminés au cours de l'étape (b) de mise sous vide des baies. En effet, la pyrazine et les composés en C6 responsables des défauts aromatiques se retrouvent principalement dans les vapeurs condensées issue de l'étape (b). Ainsi, afin d'améliorer les qualités organoleptiques du liquide alimentaire final, il peut être avantageux de ne pas ré-incorporer les vapeurs condensées recueillies à l'étape (b) dans le procédé selon l'invention. Ainsi, dans certains modes de réalisation, les vapeurs émises au cours de l'étape (b) de mise sous vide des baies sont condensées et rejetées.
Le procédé flash détente résultant de la combinaison des étapes (a) et (b) est décrit dans ses grandes lignes directrices dans le brevet EP0728189. L'homme du métier pourra ainsi se référer au contenu du brevet EP0728189 ainsi qu'à celui de l'article de synthèse d'Escudier et al., (Revue française d'œnologie, 2008, 229, 9-18) pour la mise en œuvre des étapes (a) et (b) du procédé. En particulier, les étapes (a) et (b) pourront être réalisées à l'aide de l'installation « flash détente » commercialisée par exemple par la société Pera ou de l'installation « Thermocooler® » commercialisée par la société Della Toffola.

Dans le procédé selon l'invention, l'étape (c) de macération comprend l'ensemencement des baies obtenues à l'issue de l'étape (b) par une ou plusieurs enzymes pectolytiques. Par ensemencement, on entend l'ajout nécessaire à la préparation de baies d'une quantité d'enzymes exogènes, notamment d'environ 0,1 à 8 g d'enzymes pectolytiques par hectolitres de baies ou par 100kg de baies, notamment de 2 à 4 g par hectolitres de baies. L'étape (c) de macération enzymatique des baies est ainsi réalisée préalablement à la phase de fermentation alcoolique et dans des conditions la limitant et sans fermentation alcoolique. Cette étape de macération enzymatique exogéne à celles du raisin est réalisée de préférence avant toute étape de pressurage c'est-à-dire pour des baies dont le jus et la matrice solide (pellicule, chaire, pépin...) n'ont pas été séparées par l'action d'une presse ou d'un décanteur.

On entend par enzymes pectolytiques, également appelées pectinases, des enzymes capables de dégrader les pectines présentes au niveau des parois cellulaires des plantes et, en particulier, au niveau de la pellicule du raisin. L'action des pectinases consiste essentiellement à cliver certaines liaisons covalentes de la pectine, ce qui peut conduire à la libération d'oses, d'oligosaccharides et/ou de polysaccharides de masse moléculaire inférieure. Les enzymes pectolytiques comprennent, sans y être limitées, des enzymes de la classe des hydrolases (EC 3) telles que les glycosyl-hydrolases, les endo- et exo-polygalacturonases, les β-galactosidases, les pectine-estérases et les pectine-méthyl estérases, ainsi que des enzymes de la classe des lyases (EC 4) telles les pectine-lyases.

De manière préférée, la ou les enzymes pectolytiques sont choisies parmi le groupe constitué par les endo-polygalacturonases (EC 3.2.1.15), les exo-polygalacturonases (EC 3.2.1.67), les rhamnogalacturonases (EC non défini), des β-galactosidases (EC 3.2.1.23), des pectine-estérases (EC 3.1.1.11), les pectine-méthyl estérases (EC 3.1.1.11) et les pectine-lyases (EC 4.2.2).

Il va de soi que la ou les enzymes pectolytiques introduites dans les baies pour la mise en œuvre de l'étape (c) de macération enzymatique sont des enzymes adaptées à l'élaboration de produits destinés à l'alimentation humaine. Dans certains modes de réalisation, la ou les enzymes pectolytiques de l'étape (c) sont des enzymes œnologiques c'est-à-dire des enzymes conformes au Codex Oenologique International. De préférence, les enzymes pectolytiques sont obtenues à partir d'une espèce d'*Aspergillus* telles que *A. niger et A. aculearus.* Les enzymes pectolytiques de l'étape (c) peuvent être ajoutées sous la forme d'une préparation enzymatique solide ou liquide obtenue à partir d'une espèce d'*Aspergillus* telle qu'*Aspergillus niger.* Il peut s'agir en particulier de préparations enzymatiques commerciales adaptées à une utilisation en œnologie. Il est à noter que les préparations enzymatiques commerciales sont généralement destinées à la clarification des jus et des vins obtenus après pressurage (et donc en l'absence de pellicules de raisin).

Cette préparation enzymatique peut comprendre une ou plusieurs enzymes qui ne sont pas des enzymes pectolytiques. En d'autres termes, la préparation enzymatique comprend une activité principale pectolytique éventuellement combinée à une ou plusieurs activités enzymatiques secondaires. Les activités enzymatiques secondaires participent, de préférence, à la lyse des parois cellulaires et englobent, sans y être limitées, les activités cellulase, hémi-cellulase, mannosidase, glucosidase, rhamnosidase, arabinanase et arabinosidase.

Ainsi, dans certains modes de réalisation du procédé selon l'invention, à l'étape (c) du procédé, les baies obtenues à l'issue de l'étape (b) sont ensemencées à l'aide d'une préparation enzymatique présentant une activité principale pectolytique et une ou plusieurs activités secondaires choisies parmi le groupe constitué par les activités cellulase, hémi-cellulase, glucosidase, et arabinosidase.

De son expérience et ses connaissances générales, l'homme du métier saura déterminer les conditions optimales pour la mise en œuvre de l'étape de macération (c), en particulier, en ce qui concerne les quantités d'enzymes à utiliser, la température et la durée de macération de l'étape (c). De manière générale, pour une préparation enzymatique commerciale, la quantité à ajouter est comprise dans une gamme allant de 2 à 8 g de préparation enzymatique commerciale par hectolitre de baies, notamment 2 à 4 g par hectolitre de baies. On met ainsi en contact des quantités d'enzymes correspondant généralement à 1000 à 10 000 unités pectinase pour 100 kg de baies, notamment de 1500 à 3500 unités.

L'étape de macération (c) est conduite à une température adaptée à l'utilisation d'enzymes pectolytiques. La température optimale pour la mise en œuvre de la macération enzymatique varie en fonction de la ou des enzymes pectolytiques employées et sera adaptée par l'homme du métier en fonction du type d'enzymes utilisées et de leur thermorésistance. La température de macération est néanmoins généralement inférieure à 65°C, comprise dans une gamme allant de 30 à 65°C. Avantageusement, la température de macération enzymatique est dans une gamme allant de 30°C à 55°C, de préférence comprise dans une gamme allant de 40°C à 55°C, en particulier de 45 à 55°C. L'étape de macération enzymatique sera par exemple effectuée à une température de 50°C, température incompatible avec un processus de fermentation alcoolique. La durée de macération est comprise entre 10 min et 10 heures. De manière préférée, la durée de l'étape (c) de macération est comprise dans une gamme allant de 2h à 8h ce qui englobe une durée de réaction de 2h, de 3h, de 4h, de 5h, de 6h, de 7h et de 8h.

Dans un mode de réalisation préférée, l'étape de macération (c) est effectuée à une température allant de 30°C à 55°C pendant une durée allant de 2 heures à 8 heures.

Au cours de l'étape (c) de macération, il existe différentes options technologiques pour réaliser l'étape de macération et en particulier améliorer l'effet de contact enzyme pellicules: l'introduction des enzymes dans la cuve sous vide à la température requise, la mise en œuvre de la macération dans une cuve sous agitation. Il est également possible d'effectuer la macération dans la chambre du pressoir transformée en cuve de macération dans ce cas.

Dans certains modes de réalisation, le procédé selon l'invention peut comprendre une ou plusieurs étapes supplémentaires aux étapes (a), (b), (c) et (d).

De manière préférée, l'étape (a) de chauffage des baies peut être précédée d'une étape d'éraflage et/ou d'égouttage des baies. Le jus d'égouttage peut être ré-incorporé au cours du procédé.

L'étape (c) du procédé peut être suivie d'une étape de pressurage des baies, l'étape de pressurage permettant d'obtenir le produit alimentaire liquide final. Dans ce mode de réalisation, l'étape de macération (c) peut être réalisée dans la chambre de pressurage avant que le pressurage des baies ait commencé. En d'autres termes, l'étape de macération enzymatique (c) peut être effectuée au cours du remplissage de la chambre de pressurage et avant le début du pressurage en tant que tel. Un tel mode de réalisation est particulièrement avantageux car il évite l'utilisation d'une cuve de macération pour la mise en œuvre spécifique de l'étape (c) et le pompage des baies de ladite cuve de macération vers la chambre de pressurage. Il peut permettre également un gain de temps dans la mesure où l'étape de macération est réalisée concomitamment au remplissage de la chambre de pressurage. Le pressurage est de préférence réalisé à la température de l'étape (c) c'est-à-dire à chaud, à une température allant généralement de 20°C à 65°C. Pour la mise en œuvre de ce mode particulier de réalisation, l'homme du métier pourra utiliser un pressoir n'importe quel type de pressoir communément employé en vinification, en particulier, un pressoir pneumatique, ou en alternative un décanteur centrifuge sur vendange.

A l'issue du pressurage, une étape supplémentaire de clarification du jus obtenu peut être réalisée afin d'en diminuer la turbidité. Cette étape de clarification peut être réalisée par centrifugation, par décantation, par filtration ou par enzymage c'est-à-dire par ensemencement du jus pressé par des enzymes de clarification.

D'autres étapes additionnelles peuvent être mises en œuvre dans le procédé selon l'invention telles que des étapes de pasteurisation ces étapes étant mises en œuvre après l'étape (c) de macération enzymatique.

Enfin, le procédé selon l'invention peut être mis en œuvre de manière continu ou discontinu. La matière première traitée par le procédé selon l'invention peut consister en des baies entières ou en des baies éraflées et/ou égouttées et/ou partiellement ou entièrement écrasées.

Dans un mode particulier de réalisation, le procédé selon l'invention comprend les étapes successives suivantes :
▪ une étape préliminaire d'éraflage et/ou d'égouttage et/ou d'écrasement total ou partiel des baies, de préférence de baies de raisin,
▪ une étape de chauffage (a) des baies à une température allant de 40°C à 100°C, de préférence de 70°C à 100°C, sur une durée de 1 min à 120 min, de préférence de 1 min à 60 min, le dit chauffage des baies étant réalisé par (i) le chauffage indirect des baies à l'aide d'un échangeur thermique, (ii) le chauffage des baies par immersion dans un liquide chaud, de préférence un moût, (iii) le chauffage des baies par un flux de vapeur, (iv) le chauffage ohmique des baies et (v) chauffage par micro-onde des baies.,
▪ une étape de mise sous vide (b) des baies à une pression allant de 10³ à 3.10⁴ Pa, ladite étape de mise sous vide des baies étant réalisée directement à l'issue de l'étape (a), permettant le refroidissement des baies à une température adaptée à la mise en œuvre directe d'une étape subséquente de macération par ensemencement d'une préparation enzymatique obtenue à partir d'une souche d'*Aspergillus* et ayant une activité principale pectolytique choisie parmi le groupe constitué par les endo-polygalacturonases, les exo-polygalacturonases, des β-galactosidases, des pectine estérases, les rahmnogalacturonases, les pectine méthylestérases et les pectine lyases, et dans laquelle les vapeurs produites par la mise sous vide des baies sont condensées et rejetées,
▪ une étape (c) de macération des baies issues de l'étape (b) par ensemencement des baies à l'aide d'une préparation enzymatique à activité principale pectolytique obtenue à partir d'une souche d'*Aspergillus* ladite étape de macération étant réalisée pendant une durée de 10 min à 10 h, de préférence de 2h à 8h et à une température allant de 30°C à 65°C, de préférence de 30°C à 55°C, et
▪ une étape finale (d) de récupération du produit alimentaire liquide comprenant le pressurage des baies obtenues à l'issue de l'étape (c).

Comme cela a été précisé précédemment, l'homme du métier a à sa disposition plusieurs installations commerciales permettant la mise en œuvre du procédé flash détente. L'homme du métier, de par ses connaissances générales et grâce aux dispositifs commerciaux à sa disposition, saura concevoir, sans difficulté, une installation adaptée à la mise en œuvre le procédé selon l'invention. Par exemple, l'homme du métier pourra adapter l'installation décrite à la figure 1 du brevet EP0728189 en connectant à la chambre de détente une cuve de macération elle-même connectée à un pressoir.

Dans un mode de réalisation alternatif, l'homme du métier pourra utiliser une installation présentant les éléments décrits dans la figure 1. Dans l'installation décrite à la figure 1, la vendange, c'est-à-dire les baies (20), est réceptionnée dans un dispositif adapté (1) puis passe tout d'abord dans un égrappoir (2) et ensuite acheminée dans un égouttoir (4) par un moyen adapté (3). Le jus d'égouttage (21) est récupéré par un moyen adapté. Ce jus d'égouttage peut être éliminé, additionné au jus final ou utilisé pour générer la vapeur nécessaire au chauffage de la vendange (1) au sein de la chambre de chauffage. En cas de mauvais état sanitaire de la vendange (20), l'eau d'égouttage (21) est de préférence éliminée et n'est donc pas utilisée au cours du procédé. La vendange égouttée passe dans la chambre de chauffage (5) où elle est amenée à une température adaptée généralement comprise entre 70°C et 100°C. La chambre de chauffage (5) peut être de tout type. Il peut s'agir d'une chambre de chauffage par immersion de la vendange dans un jus ou un moût. Il peut s'agir également d'un échangeur coaxial ou à surface raclée, d'une unité de chauffage ohmique ou à micro-ondes. Le chauffage de la vendange (20) peut être effectué par vapeur condensante biologique formée, par exemple, à partir de jus d'égouttage ou de condensats provenant du procédé. A la sortie de la chambre de chauffage (5), la vendange (1) chauffée à une température comprise entre 70°C et 100°C est amenée par un conduit adapté (16) dans la chambre de détente (5). La chambre de détente (7) est liée à un condenseur (8) lui-même connecté à une pompe à vide (9) capable de créer au sein de la chambre de détente (6) un vide allant de 10³ à 3.10⁴ Pa. Le condenseur (8) est également connecté à une tour aéroréfrigérante. La mise sous vide des baies dans la chambre de détente (7) provoque une évaporation partielle de l'eau des baies et leur refroidissement à une température adaptée pour l'étape subséquente de macération à l'aide d'enzymes pectolytiques (12). Le condenseur (8) possède en sortie un moyen (10) approprié pour récolter les vapeurs condensées (22) issues de la mise sous vide de la vendange (1) chauffée. Dans le mode de réalisation représenté, les vapeurs condensées (22) ne sont pas réincorporées dans le procédé

A la sortie de la chambre de détente (7) la vendange est amenée par un conduit adapté (14) dans une cuve de macération (10). La préparation enzymatique à activité pectolytique (12) est ajoutée en amont de la cuve de macération (10) dans les baies au niveau du conduit (14) au moyen d'une vanne d'injection (11). La cuve de macération (10) peut comprendre un moyen adapté pour maintenir la température de macération à une valeur souhaitée. La cuve de macération peut présenter également un niveau de remplissage réglable en fonction de la durée de macération et être équipée d'un moyen permettant d'agiter la vendange pendant la macération. La macération est de durée variable, comme cela a été mentionné ci-avant, en général, de quelques minutes à quelques heures. Lorsque la macération est terminée, les baies traitées (23) sont acheminées par un conduit adapté (17) dans un pressoir (11) qui peut être de tout type dont mécanique, pneumatique ou dynamique. Le jus formé par le pressurage de la vendange est récupéré à la sortie du pressoir (11) pour être soit conditionné comme moût ou jus, soit mis en œuvre dans une étape de vinification.

Le procédé selon l'invention permet d'obtenir des produits alimentaires liquides à partir de baies, lesdits produits alimentaires liquides étant enrichis en polysaccharides et en oligosaccharides. Le produit alimentaire liquide obtenu à l'issue de l'étape d tel que décrit précédemment est ainsi un jus de baie, essentiellement exempt de résidu solide, et ne présentant pas une teneur en alcool significative, de préférence un taux d'alcool inférieur à 0,5%vol, voire inférieur ou égal à 0,2% vol; le processus fermentaire aura lieu sur mout clarifié. Les teneurs en polysaccharides, en particulier en polysaccharides RGII, détectées dans le produit alimentaire liquide selon l'invention sont bien supérieures à celles observées dans des produits alimentaires liquides obtenus par des méthodes d'extraction telles que le foulage, le thermotraitement tel que la macération pré-fermentaire à chaud ou le procédé flash détente en phase liquide, en l'absence d'une étape spécifique de macération pré-pressurage des baies à l'aide d'une ou plusieurs enzymes pectolytiques.

Ainsi, la présente invention concerne également l'utilisation de la macération des baies par ensemencement d'une ou plusieurs enzymes à activité pectolytique dans un procédé de préparation d'un produit alimentaire liquide à partir de baies pour enrichir le produit alimentaire liquide en polysaccharides et en oligosaccharides. Cette macération enzymatique des baies sera effectuée avant toute étape de fermentation alcoolique par des techniques classiques, mettant en œuvre des levures.
De manière optionnelle, le produit liquide alimentaire récupéré à l'issue de l'étape d peut être soumis à une étape d'inactivation des enzymes pectolytiques, par exemple par un traitement par flash pasteurisation (à titre indicatif 90°C quelques minutes).
Par ailleurs, le procédé selon l'invention pourra comprendre des étapes optionnelles de fermentation alcoolique en milieu liquide du produit alimentaire liquide enrichi en polysaccharides directement après l'étape d, ou après des étapes supplémentaires de clarification et/ou d'inactivation enzymatique. Le produit obtenu après fermentation alcoolique est un vin comprenant des taux augmentés de polysaccharides et de RGII.

De manière préférée, la macération des baies par ensemencement d'une ou plusieurs enzymes à activité pectolytique est réalisée avant toute étape de pressurage des baies et est couplée à une étape de mise sous vide des baies.

L'invention concerne également un produit alimentaire liquide obtenu par le procédé selon l'invention et présentant les propriétés décrites ci-avant. Plus précisément, L'invention a pour objet supplémentaire un produit alimentaire liquide préparé à partir de baies caractérisé en ce qu'il comprend
- une teneur en oligosaccharides au moins égale à 1,2 fois, de préférence 1,5 fois, celle d'un produit de référence et
- une teneur en polysaccharides au moins égale à 1,2 fois, de préférence 1,5 fois, celle d'un produit de référence, réalisé sur une matière première équivalente.
ledit produit de référence étant obtenu par un procédé qui est similaire au procédé mis en oeuvre pour obtenir le produit alimentaire liquide mais qui ne comprend pas l'étape (c) de macération enzymatique.

Comme cela a été précisé précédemment, le produit alimentaire liquide obtenu par le procédé selon l'invention est particulièrement adapté à une utilisation dans la préparation de vins, en particulier de vins rouges, enrichis en polysaccharides et en oligosaccharides, par vinification en phase liquide.

Ainsi, un objet supplémentaire de la présente invention est l'utilisation du produit alimentaire liquide obtenu par le procédé selon l'invention pour la préparation d'un vin, de préférence un vin rouge, enrichi en polysaccharides et en oligosaccharides, par vinification en phase liquide.

L'invention concerne également une méthode de préparation d'un vin comprenant une étape de vinification - avec fermentation alcoolique- en phase liquide du produit alimentaire liquide obtenu par le procédé selon l'invention.

Plus précisément, l'invention concerne une méthode de préparation d'un vin, de préférence un vin rouge, enrichi en polysaccharides et en oligosaccharides, comprenant les étapes successives suivantes :
(a) une étape de chauffage des baies à une température allant de 40°C à 100°C sur une durée allant de 1 minute à 120 minutes, de préférence de 1 min à 60 min,
(b) une étape de mise sous vide des baies à une pression allant de 10³ à 3.10⁴ Pa, ladite étape de mise sous vide des baies étant réalisée directement à l'issue de l'étape (a)
(c) une étape de macération des baies par ensemencement d'une ou plusieurs enzymes à activité pectolytique, durant de 10 min à 10 heures à une température allant de 30°C à 65°C,
(d) une étape de pressurage des baies macérées obtenues à l'étape (c) pour obtenir un produit alimentaire liquide, cette étape peut comprendre, en option, l'élimination des particules solides résiduelles présentes dans le produit alimentaire liquide obtenu après pressurage et
(f) une étape de vinification en phase liquide du produit alimentaire liquide obtenu à l'étape (d)

Dans le cadre de la présente invention, on entend par « vinification en phase liquide » la fermentation alcoolique du produit liquide issu à l'étape (d). En d'autres termes, la fermentation alcoolique en phase liquide a lieu en l'absence de marc (et donc en l'absence des pellicules de raisin) et peut être assistée par l'ajout de levures œnologiques ou de ferments malolactiques que l'on trouve classiquement dans le commerce. Cette étape de vinification en phase liquide est effectuée généralement à une température régulée (de 20 à 25 °C en général) après levurage et léger sulfitage et dure de un à plusieurs jours.

Le procédé selon l'invention peut donc être utilisé pour préparer des vins rouges par fermentation en phase liquide. Ceci est particulièrement surprenant, lorsque l'on sait que l'état de technique décrit que les vins rouges présentant un bon profil organoleptique sont très généralement obtenus par vinification sur marc. Les vins rouges ainsi obtenus sont vinifiés en phase liquide comme pour les vins blancs

Les étapes (a), (b) et (c) sont telles que celles décrites précédemment dans le cadre du procédé de préparation d'un produit alimentaire liquide. Les différents modes de réalisation de ces étapes décrits précédemment peuvent donc être mis en œuvre, seuls ou en combinaison, dans la méthode de préparation d'un vin selon l'invention.

Il est à noter que la méthode de préparation d'un vin telle que décrite précédemment peut comprendre des étapes supplémentaires. En particulier, l'étape (a) peut être précédée d'une étape d'éraflage et/ou d'égouttage et/ou d'écrasement partiel ou total des baies de raisins.

Un objet supplémentaire de l'invention est un vin, de préférence un vin rouge, pouvant être obtenu selon la méthode de préparation d'un vin précédemment décrite.

Au regard des résultats expérimentaux obtenus pour les jus de raisins, il est attendu que le vin selon l'invention présente des teneurs en oligosaccharides et en polysaccarides au moins 1,2 fois, de préférence au moins 1,5 fois supérieures aux teneurs en oligosaccharides et en polysaccharides d'un vin obtenu à partir d'un produit alimentaire liquide de référence tel que défini précédemment.

La présente invention est en outre illustrée, par les exemples suivants.

### EXEMPLE 1

### Effet de la combinaison d'une étape de flash détente et d'une étape de macération à l'aide d'enzymes pectolytiques sur la composition des jus de raisin

### 1. Matériels et Méthodes

### a) Vendange

Les expériences ont été réalisées avec un cépage teinturier : l'alicante domaine Inra Pech Rouge. La vendange est récoltée mécaniquement avec une machine Pellenc équipée d'un érafloir et d'une table de tri embarqués (Selectiv system). Les rafles, pétioles et morceaux de feuilles sont donc éliminés dès la récolte. Le rendement de la parcelle a été de 6,1 tonnes par hectare.

### b) Préparations enzymatiques à activité pectolytique

Deux préparations enzymatiques commerciales à activité pectolytique obtenues à partir d'*Aspergillus niger* ont été utilisées : enzyme 1 et enzyme 2

Les quantités ajoutées pour la mise en œuvre de l'étape de macération enzymatique pré-pressurage sont celles préconisées par le fabriquant.

### c) Procédé mettant en œuvre la technologie flash détente

La vendange est traitée par flash détente grâce à un dispositif couplant un échangeur thermique à vapeur biologique fluente et une chambre de détente..

La vendange a été chauffée jusqu'à 95 °C en 9 min puis soumise à un vide de 100 mbars absolus. La mise sous vide a abaissée la température de la vendange à 45 °C.

Directement à la sortie de la chambre de détente, trois lots de 100 kg de vendange ont été prélevés. Deux lots ont été ensemencés par une préparation enzymatique à activité principale pectolytique (Enzyme 1 ou Enzyme 2). La macération enzymatique de la vendange a été réalisée à 45°C pendant 3 heures sous agitation dans une cuve adaptée en termes de volume pour permettre ce temps de contact. A l'issue de l'étape de macération, la vendange a été pressée à l'aide d'un pressoir pneumatique à eau à une pression de 3 bars pendant 10 minutes. Le jus récolté a subi une étape de clarification enzymatique pendant une nuit à 10°C. Après homogénéisation et centrifugation (8000 trs/min pendant 5 min), le jus a été conditionné en bouteille de 25 cl, pasteurisé à 85°C pendant 20 min en autoclave par fluage de vapeur, refroidi rapidement par ruissellement d'eau puis stocké en vinothèque à 17°C.

Le troisième lot de vendange récolté à la sortie de la chambre de détente (lot témoin) a subi des traitements similaires aux deux autres lots à l'exception de l'étape de macération enzymatique réalisée à l'issue de la flash détente qui a été remplacée par une étape d'incubation de la vendange pendant 3h à 45°C.

### d) Procédé de thermotraitement (comparatif)

Dans ce procédé de préparation de jus, l'étape de flash détente a été remplacée par une étape de thermo-traitement consistant à chauffer la vendange à l'aide d'un échangeur thermique à vis à une température de 75 °C par fluage de vapeur biologique (produite par une fraction du jus), la vitesse de la vis sans fin de la chambre de chauffe ayant été réglée pour passer la température en continu de 25 °C à 75 °C en 2 minutes.

Quand l'équilibre thermique a été atteint, quatre lots de 100 kg de vendange ont été prélevés et égouttés dans des bidons de 200 L.

Le premier lot a subi une macération en l'absence d'enzyme pendant 40 min à 75 °C et a été pressé directement à l'aide du pressoir pneumatique à eau à une pression de 3 bars pendant 10 minutes.

Les trois autres lots ont été refroidis jusqu'à atteindre 60 °C (au bout de 2 h environ). Deux d'entre eux ont été ensemencés par une préparation enzymatique à activité pectolytique (Enzyme 1 ou Enzyme 2) et ont été soumis à une macération pré-fermentaire à chaud à 60°C pendant 6h. Le dernier lot a été laissé à macérer à 60°C sans enzyme. Ces trois lots ont été pressés directement à l'aide du pressoir pneumatique à eau à une pression de 3 bars pendant 10 minutes.

Les quatre lots de jus obtenus après pressurage ont été soumis à une clarification enzymatique pendant une nuit à 10°C. Après homogénéisation et centrifugation (8000 trs/min pendant 5 min), les jus ont été conditionnés en bouteille de 25 cl, pasteurisés à 85°C pendant 20 min puis stockés en vinothèque à 17°C.

Lorsque l'objectif est d'élaborer un vin rouge et non pas un jus, le jus obtenu peut être fermenté à une température régulée (de 20 à 25 °C en général) après levurage et léger sulfitage.

### e) Analyse des jus

Les jus obtenus sont analysés le premier jour :
- °Brix
- pH
- acidité totale, dosage potentiométrique (g H2SO4 / L)
- Intensité Colorante (IC) : somme des absorbances à 420, 520 et 620 nm, spectrophotométrie (Méthode « Foulon SOPAGLY » = dilution avec tampon au pH du jus), jus d'Alicante dilués 1/10 solution tampon pH 3,5, jus de Carignan dilués 1/5 solution tampon pH 3,10, mesure des absorbances à 420, 520 et 620 nm dans une cuve de 1 mm
- teneur en anthocyanes, spectrophotométrie (mg ou g / L), Méthode AUBERT : dilution 1/100 à l'éthanol 96 % acidifié 2 % HCl, mesure de l'absorbance à 550 nm dans une cuve de 10 mm
- Indice des Polyphénols Totaux (IPT), spectrophotométrie, dilution 1/100 à l'eau, mesure de l'absorbance à 280 nm dans une cuve de 10 mm
- L ^{∗} a ^{∗} b, spectrocolorimétrie, Minolta

Afin de suivre l'évolution des échantillons dans le temps, l'IC, les IPT et la teneur en anthocyanes sont ensuite analysés tous les jours pendant une semaine, puis tous les quinze jours pendant trois mois et enfin tous les deux mois pendant un an.

### f) Analyse de la teneur et de la composition en oligosaccharides et polysaccharides des jus après la mise en bouteille

▪ Préparation des polysaccharides et oligosaccharides des jus : 5 ml de jus sont prélevés directement de la bouteille et décolorés sur une colonne de gel de Polyamide SC6 équilibrée en NaCl 1M. La fraction non retenue est concentrée puis injectée sur une colonne de gel perméation (Superdex 30 ; 1.6 x 60 cm, Amersham Biosciences) équilibrée par du formiate d'ammonium 30 mM pH 5.8 à un débit de 1 ml/min.
▪ Caractérisation : la fraction polysaccharidique est collectée et analysée par sa composition en monosaccharides obtenues après hydrolyse acide, réduction et acétylation des monomères libérés (1 mg échantillon, TFA 2N, 75 min, 120°C, réduction (NaBH₄, 20mg/ml à pH 11), acétylation et analyse des polyols acétylés par GC-MS (chromatographie en phase gazeuse couplée à un spectromètre de masse). La fraction oligosaccharidique est collectée et analysée par analyse GC-MS des dérivés triméthylsilylés (TMS) formés après méthanolyse (MeOH/HCl 1N, 16H, 80°C).

### 2. Résultats

### a) Intensité colorante, indice en polyphénols totaux et teneur en anthocyanes.

Les meilleurs résultats en termes d'intensité colorante, d'indice en polyphénols totaux et en anthocyanes ont été obtenus pour les jus de raisins préparés par les procédés mettant en œuvre la technologie flash détente. De manière remarquable, les jus obtenus par un procédé mettant en œuvre la technologie flash détente présentent une intensité colorante et une teneur en anthocyanes qui sont environ 30% supérieures à celles des jus obtenus par thermo-traitement.

La mise en œuvre d'une étape de macération pré-pressurage à l'aide d'enzymes pectolytiques n'a pas d'incidence sur la teneur en polyphénols et l'intensité colorante des jus.

En d'autres termes, une macération à l'aide d'une préparation enzymatique pectolytique réalisée avant l'étape de pressurage n'a pas d'impact sur l'extraction des polyphénols, que cette étape de macération soit couplée à une étape de flash détente ou à une étape de thermotraitement des vendanges.

**Tableau 1 : Intensité colorante, indice en polyphénols totaux et teneur en anthocyananes après 282 jours de conservation des jus de raisins en fonction du procédé de préparation**

| | **Intensité colorante** | **Indice en polyphénols totaux (mesuré à 280nm**) | **Teneur en anthocyanes (g/l)** |
|---|---|---|---|
| Lots Flash détente + macération enzymatique pré-pressurage (invention) | 34,6 - 35 | 129-141,2 | 1,23-1,25 |
| Lot Flash détente sans macération enzymatique | 34,3 | 138,1 | 1,24 |
| Lots thermo-traitement + macération enzymatique pré-pressurage | 25,2 - 27,1 | 115,7-119,5 | 0,91-0,98 |
| Lots thermo-traitement sans macération enzymatique pré-pressurage | 25,2 - 26,8 | 128,1 | 0,89 |
| Lots thermo-traitement avec 40 min à 75°C sans macération enzymatique | 29,9 | 128,8 | 1,09 |

### b) Concentration en polysaccharides et oligosaccharides dans les jus de raisin

La composition en polysaccharides de chaque jus est calculée à partir de la concentration des différents résidus glycosidiques déterminée par GC et qui sont caractéristiques des polysaccharides isolés à partir de vin (Vidal et al., 2003, Carbohydrate Polymers, 54(4), 439-447). Les concentrations sont exprimées en mg/litre de jus.

Les polysaccharides majoritaires sont les PRAGs ou polysaccharides riches en arabinose et en galactose. Ils représentent de 60% à 80% des polysaccharides isolés dans les jus. La seconde classe de polysaccharide détecté est le Rhamnogalacturonane II. On détecte très peu de polymannanes.

La flash détente permet d'extraire deux fois plus de polysaccharides que le thermotraitement de référence, et ceci en présence ou en l'absence de l'étape de macération pré-pressurage à l'aide d'enzymes pectolytiques.

De manière remarquable, le couplage du procédé de flash détente avec une macération des baies à l'aide d'enzymes pectolytiques permet d'augmenter de manière très significative la teneur en polysaccharides dans les jus, comparativement à un procédé flash détente ne mettant pas en œuvre ladite étape de macération. Dans le cadre d'un procédé de préparation basé sur la technologie flash détente, l'étape de macération enzymatique permet d'augmenter la teneur globale en polysaccharides d'environ 175% : la teneur en polysaccharides totaux passent ainsi de 390 mg/L (procédé flash détente sans macération enzymatique) à 690 mg/L (procédé flash détente suivie directement par une macération des baies à l'aide d'enzymes pectolytiques). Le polysaccharide qui bénéficie majoritairement de cette augmentation est le polysaccharide RGII dont la teneur passe de 50 mg/L à 300 mg/L.

Le couplage du thermotraitement avec une étape de macération enzymatique induit également une augmentation de la teneur en polysaccharides des jus (par rapport aux jus obtenus par thermotraitement sans mise en œuvre d'une étape de macération enzymatique pré-pressurage). Néanmoins l'augmentation de la teneur en polysaccharides des jus est bien plus faible que celle observée dans le cas des jus obtenus par flash détente : en effet, la teneur en polysaccharides passe tout au plus de 210 mg/L à 360 mg/L et celle en RGII passe tout au plus de 40 mg/L à 130 mg/L.

En d'autres termes, les écarts des teneurs en polysaccharides observés entre les jus obtenus par flash détente et par (flash détente + macération enzymatique pectolytique pré-pressurage) sont bien plus importants que ceux observés pour les jus obtenus par thermotraitement et (thermotraitement + macération enzymatique pectolytique pré-pressurage).

On observe ainsi que (i) l'étape de flash détente et de (ii) l'étape de macération pré-pressurage à l'aide d'enzymes pectolytiques agit en synergie sur l'extraction des polysaccharides. Cet effet de synergie n'est pas observé lorsque l'on couple une étape de thermotraitement avec une étape de macération pré-pressurage à l'aide d'enzymes pectolytiques.

**Tableau 2 : teneurs en polysaccharides totaux (PRAGs, RGII et MPs) et en RGII seul des jus obtenus pour les différents procédés.**

| | **Teneur en polysaccharides (mg/L)** | **Teneur en RGII (mg/L)** |
|---|---|---|
| **Lot Flash détente + macération enzymatique pré-pressurage Enzyme 1 (invention)** | 690 | 250 |
| **Lot Flash détente + macération enzymatique pré-pressurage Enzyme 2 (invention)** | 720 | 300 |
| **Lot Flash détente sans macération enzymatique (comparatif)** | 390 | 50 |
| **Lot thermo-traitement + macération enzymatique pré-pressurage Enzyme 1 (comparatif)** | 240 | 90 |
| **Lot thermo-traitement + macération enzymatique pré-pressurage Enzyme 2 (comparatif)** | 360 | 130 |
| **Lot thermo-traitement sans macération enzymatique pré-pressurage (comparatif)** | 210 | 40 |
| **Lot thermo-traitement avec 40 min à 75 °C sans macération enzymatique (comparatif)** | 180 | 40 |

Une tendance identique est observée pour la teneur en oligosaccharides des jus finals comme cela est illustré dans le tableau 3 ci-dessus.

En effet, l'introduction d'une étape de macération enzymatique pré-pressurage permet d'augmenter de manière significative la teneur en oligosaccharides aussi bien dans le cadre de jus obtenus par flash détente (de +230% à +325%) que dans le cas de jus obtenus par thermo-traitement (de +165% à +218%). Néanmoins, l'augmentation est bien plus importante dans le cas de jus obtenus par Flash détente que dans le cas de jus obtenus par thermotraitement, ce qui illustre une fois encore l'effet de synergie résultant du couplage de l'étape de macération enzymatique pré-pressurage avec l'étape de Flash détente du procédé selon l'invention.

De manière remarquable, l'introduction de l'étape de macération enzymatique pré-pressurage dans le procédé de préparation de jus de raisin ne modifie la composition des oligosaccharides extraits. Les oligosaccharides présents dans les jus comprennent essentiellement les oses suivants : Rhamnose, Arabinose, Galactose, Xylose mais aussi des acides Glucuroniques et Galacturoniques. On retrouve donc dans les jus préparés des oligosaccharides de type arabinogalactanes, de type rhamnogalacturonanes de type 1 et d'oligomannanes. L'identification de xylose et d'acide 4-O-Me-glucuronique indique la présence de traces d'hémicelluloses de type glucuronoxylanes résultant des activités secondaires des préparations enzymatiques utilisées.

**Tableau 3 : teneur en oligosaccharides des jus obtenus pour les différents procédés.**

| | **Teneur en oligosaccharides (mg/L)** |
|---|---|
| **Lot Flash détente + macération enzymatique pré-pressurage Enzyme 1 (invention)** | 924 |
| **Lot Flash détente + macération enzymatique pré-pressurage Enzyme 2 (invention)** | 656 |
| **Lot Flash détente sans macération enzymatique (comparatif)** | 284 |
| **Lot thermo-traitement + macération enzymatique pré-pressurage Enzyme 1 (comparatif)** | 361 |
| **Lot thermo-traitement + macération enzymatique pré-pressurage Enzyme 2 (comparatif)** | 479 |
| **Lot thermo-traitement sans macération enzymatique pré-pressurage (comparatif)** | 219 |
| **Lot thermo-traitement avec 40 min à 75°C sans macération enzymatique (comparatif)** | 135 |

### Conclusion

Les traitements thermiques de la vendange sont efficaces pour élaborer des jus de raisins colorés. La Flash Détente est la technique la plus efficace pour l'obtention de jus présentant des propriétés améliorées en termes d'intensité colorante, d'indice en polyphénols totaux et de teneur en anthocyanes.

Le couplage de la Flash Détente avec une étape de macération pré-pressurage à l'aide d'enzymes pectolytiques permet l'obtention de jus enrichis en polysaccharides et en oligosaccharides. Les jus obtenus par un tel couplage comprennent des teneurs d'environ 700 mg/L pour les polysaccharides et d'environ 900 mg/L pour les oligosaccharides. De manière remarquable, la teneur en RGII des jus obtenus est très élevée (jusqu'à 300 mg/L) comparativement aux jus obtenus par Flash détente (en l'absence d'une étape de macération pré-enzymatique).

### EXEMPLE 2

### Elimination des notes herbacées

L'élimination des condensats de vapeurs émises par les baies au cours de l'étape de mise sous vide (b) du procédé selon l'invention permet de diminuer de manière significative les défauts aromatiques de type herbacé des vins finals. En effet, au cours de la mise sous vide, les composés aromatiques (en C6 et pyrazine) responsables des notes herbacées sont extraits par vaporisation entraînant une diminution significative de la teneur des baies en ces composés.

**Tableau 4 : Teneur globale en composés aromatiques en C6 (µg/l) dans les baies après et avant la mise en œuvre d'une étape de flash détente**

| | **Teneur globale en composés en C6 (µg/l)** | | |
|---|---|---|---|
| Cépage | Teneur des baies avant la mise en œuvre de la flash détente | Teneur des baies en sortie de flash détente (élimination des condensats) | % de perte |
| Cabernet Sauvignon | 622 | 346 | 44 |
| Merlot n°1 | 141 | 73 | 48 |
| Malbec n °1 | 782 | 640 | 18 |
| Merlot n °2 | 262 | 111 | 58 |
| Carmenère 15/05 | 1442 | 208 | 86 |
| Merlot/Carmenère | 378 | 135 | 64 |
| Malbec n °2 | 894 | 143 | 84 |

**Tableau 5 : teneur en pyrazine dans les baies et les condensats formés au cours du procédé flash**

| | **Teneur en pyrazine (µg/l)** | | | |
|---|---|---|---|---|
| Cépage | Baies avant la mise en œuvre de la flash détente | Baies en sortie de flash détente (élimination des condensats) | Baies en sortie de flash détente avec ré-incorporation des condensats | Teneur dans les condensats |
| Cabernet Sauvignon | 5,2 | 1,7 | 3,7 | 24,6 |

## Revendications

1. Procédé de préparation d'un produit alimentaire liquide enrichi en oligosaccharides et en polysaccharides, à partir de baies, comprenant les étapes successives suivantes :
(a) une étape de chauffage des baies à une température allant de 40°C à 100°C,
(b) une étape de mise sous vide des baies à une pression allant de 10³ à 3.10⁴ Pa, ladite étape de mise sous vide des baies étant réalisée directement à l'issue de l'étape (a),
(c) une étape de macération des baies par ensemencement d'une ou plusieurs enzymes pectolytiques choisies parmi le groupe constitué par les endo-polygalacturonases, les exo-polygalacturonases, des β-galactosidases, les rhamnogalacturonases, des pectine-estérases, les pectine-méthyl estérases et les pectine-lyases, à une température de 30°C à 65°C,
laquelle étape de macération (c) est effectuée sur une durée de 10 min à 10h, en l'absence de fermentation alcoolique,
(d) une étape finale de récupération du produit alimentaire liquide,
lesquelles étapes (a), (b) et (c) sont réalisées avant toute étape de pressurage des baies et de fermentation alcoolique de celles-ci.

2. Procédé selon la revendication 1 **caractérisé en ce qu'**à l'étape (a), le chauffage des baies est effectué sur une durée allant de 1 min à 30 min.

3. Procédé selon les revendications 1 ou 2 **caractérisé en ce qu'**à l'étape (a), les baies sont chauffées par une technique choisie parmi le groupe constitué par (i) le chauffage indirect des baies à l'aide d'un échangeur thermique, (ii) le chauffage des baies par immersion dans un liquide chaud, de préférence un moût, (iii) le chauffage des baies par un flux de vapeur, (iv) le chauffage ohmique des baies et (v) le chauffage par micro-ondes des baies.

4. Procédé selon l'une quelconque des revendications 1 à 3 **caractérisé en ce que** dans l'étape (b) de mise sous vide, les baies sont refroidies à une température adaptée pour la mise en oeuvre de l'étape (c) de macération enzymatique.

5. Procédé selon l'une quelconque des revendications 1 à 4 **caractérisé en ce que** dans l'étape de macération (c), la ou les enzymes pectolytiques sont ajoutées aux baies sous la forme d'une préparation enzymatique à activité principale pectolytique obtenue à partir d'une espèce d'*Aspergillus.*

6. Procédé selon l'une quelconque des revendications 1 à 5 **caractérisé en ce que** les vapeurs émises par les baies au cours de l'étape (b) sont condensées et réincorporées aux baies au cours de l'une quelconque des étapes du procédé.

7. Procédé selon l'une quelconque des revendications 1 à 5 **caractérisé en ce que** les vapeurs émises par les baies au cours de l'étape (b) sont condensées et rejetées.

8. Procédé selon l'une des revendications 1 à 7 **caractérisé en ce que** les baies sont préalablement éraflées et/ou égouttées et/ou totalement ou partiellement écrasées avant la mise en œuvre de l'étape (a) de chauffage

9. Procédé selon l'une des revendications 1 à 8 **caractérisé en ce que** l'étape (c) de macération est suivie d'une étape de pressurage des baies.

10. Procédé selon la revendication 9 **caractérisé en ce que** l'étape (c) de macération est réalisée dans la chambre de pressurage avant la mise en œuvre du pressurage

11. Procédé selon l'une des revendications 1 à 10 **caractérisée en ce que** les baies sont des baies de raisin.

12. Produit alimentaire liquide enrichi en polysaccharides et en oligosaccharides obtenu à partir de baies par le procédé de préparation tel que défini dans l'une quelconque des revendications 1 à 11, **caractérisé en ce qu'**il comprend :
▪ une teneur en oligosaccharides au moins égale à 1,2 fois, de préférence 1,5 fois, celle d'un produit de référence et
▪ une teneur en polysaccharides au moins égale à 1,2 fois, de préférence 1,5 fois, celle d'un produit de référence,
ledit produit de référence étant obtenu par un procédé qui est similaire au procédé mis en œuvre pour obtenir le produit alimentaire liquide mais qui ne comprend pas l'étape (c) de macération enzymatique,
lequel produit alimentaire liquide présente un taux d'alcool inférieur à 0,5% vol.

13. Méthode de préparation d'un vin, de préférence un vin rouge, **caractérisé en ce qu'**il comprend une étape de vinification, avec fermentation alcoolique, en phase liquide d'un produit alimentaire liquide tel que défini dans la revendication 12 ou d'un produit alimentaire liquide obtenu selon le procédé défini dans l'une quelconque des revendications 1 à 11.

14. Procédé de préparation d'un vin, **caractérisé en ce que** les étapes a) à d) de préparation d'un produit alimentaire liquide telles que défini dans les revendications 1 à 11 sont suivie d'une étape de fermentation alcoolique en milieu liquide dudit produit alimentaire liquide obtenu directement après l'étape d) ou après des étapes supplémentaires de clarification et/ou d'inactivation enzymatique.

## Patentansprüche

1. Verfahren zur Herstellung eines mit Oligosacchariden und mit Polysacchariden angereicherten flüssigen Nahrungsmittelprodukts aus Beeren, umfassend die folgenden aufeinanderfolgenden Schritte:
(a) einen Schritt des Erhitzens der Beeren auf eine Temperatur von 40 °C bis 100 °C,
(b) einen Schritt des Setzens der Beeren unter ein Vakuum bei einem Druck von 10³ bis 3.10⁴ Pa, wobei der schritt des Setzens der Beeren unter ein Vakuum direkt am Ende des Schritts (a) durchgeführt wird,
(c) einen Schritt des Mazerierens der Beeren durch Aussäen eines oder mehrerer pektolytischer Enzyme, die ausgewählt werden aus der Gruppe bestehend aus Endopolygalacturonasen, Exopolygalacturonasen, β-Galactosidasen, Rhamnogalacturohasen, Pectinesterasen, Pectinmethylesterasen und Pectinlyasen, bei einer Temperatur von 30 °C bis 65 °C,
wobei der Schritt des Mazerierens (c) während einer Dauer von 10 min bis 10 h in Abwesenheit einer alkoholischen Fermentation durchgeführt wird,
(d) einen Endschritt des Gewinnens des flüssigen Nahrungsmittelprodukts,
wobei die Schritte (a), (b) und (c) vor jedem Schritt des Pressens der Beeren und der alkoholischen Fermentation derselben durchgeführt werden.

2. Verfahren nach Anspruch 1,
**dadurch gekennzeichnet, dass** in dem Schritt (a) das Erhitzen der Beeren während der Dauer von 1 min bis 30 min durchgeführt wird.

3. Verfahren nach den Ansprüchen 1 oder 2,
**dadurch gekennzeichnet, dass** in dem Schritt (a) die Beeren durch eine Technik erhitzt werden, die ausgewählt wird aus der Gruppe bestehend aus (i) dem indirekten Erhitzen der Beeren mit Hilfe eines Wärmetauschers, (ii) dem Erhitzen der Beeren durch Eintauchen in eine heiße Flüssigkeit, vorzugsweise eine Maische, (iii) dem Erhitzen der Beeren durch einen Dampfstrom, (iv) dem ohmschen Erhitzen der Beeren und (v) dem Erhitzen der Beeren durch Mikrowellen.

4. Verfahren nach einem der Ansprüche 1 bis 3,
**dadurch gekennzeichnet, dass** in dem Schritt (b) des Setzens unter ein Vakuum die Beeren auf eine Temperatur abgekühlt werden, die für die Durchführung des Schritts (c) des enzymatischen Mazerierens geeignet ist.

5. Verfahren nach einem der Ansprüche 1 bis 4,
**dadurch gekennzeichnet, dass** in dem Schritt (c) des Mazerierens das oder die pektolytischen Enzyme den Beeren in der Form einer enzymatischen Zubereitung mit einer pektolytischen Hauptaktivität zugegeben werden, die aus einer Art *von Aspergillus* erhalten wird.

6. Verfahren nach einem der Ansprüche 1 bis 5,
**dadurch gekennzeichnet, dass** die Dämpfe, die von den Beeren während des Schritts (b) abgegeben werden, kondensiert werden und in die Beeren während irgendeines der Schritte des Verfahrens wieder eingebracht werden.

7. Verfahren nach einem der Ansprüche 1 bis 5,
**dadurch gekennzeichnet, dass** die Dämpfe, die von den Beeren während des Schritts (b) abgegeben werden, kondensiert werden und verworfen werden.

8. Verfahren nach einem der Ansprüche 1 bis 7,
**dadurch gekennzeichnet, dass** die Beeren zuvor abgestreift und/oder abgetropft und/oder zur Gänze oder teilweise zerdrückt werden vor der Durchführung des Schritts (a) des Erhitzens.

9. Verfahren nach einem der Ansprüche 1 bis 8,
**dadurch gekennzeichnet, dass** der Schritt (c) des Mazerierens von einem Schritt des Pressens der Beeren gefolgt wird.

10. Verfahren nach Anspruch 9,
**dadurch gekennzeichnet, dass** der Schritt (c) des Mazerierens in einer Presskammer vor der Durchführung des Pressens durchgeführt wird.

11. Verfahren nach einem der Ansprüche 1 bis 10,
**dadurch gekennzeichnet, dass** die Beeren Weintrauben sind.

12. Mit Polysacchariden und mit Oligosacchariden angereichertes flüssigen Nahrungsmittelprodukt, welches aus Beeren durch das Herstellungsverfahren, wie in einem der Ansprüche 1 bis 11 definiere, erhalten wird, **dadurch gekennzeichnet, dass** dieses umfasst:
- einen Gehalt an Oligosacchariden mindestens gleich dem 1,2-fachen, vorzugsweise 1,5-fachen, jenes eines Referenzprodukts und
- einen Gehalt an Polysacchariden mindestens gleich dem 1,2-fachen, vorzugsweise 1,5-fachen, jenes eines Referenzprodukts,
wobei das Referenzprodukt durch ein Verfahren erhalten wird, welches dem Verfahren ähnlich ist, das durchgeführt wird, um das flüssige Nahrungsmittelprodukt zu erhalten, das jedoch den Schritt (c) des enzymatischen Mazerierens nicht umfasst,
wobei das flüssige Nahrungsmittelprodukt einen Gehalt an Alkohol von weniger als 0,5 Vol.-% aufweist.

13. Verfahren zur Herstellung eines Weins, vorzugsweise eines Rotweins,
**dadurch gekennzeichnet, dass** dieses einen Schritt der Vinifikation, mit alkoholischer Fermentation, in der Flüs-sigphase eines flüssigen Nahrungsmittelprodukts, wie in Anspruch 12 definiert, oder eines flüssigen Nahrungsmittelprodukts, das gemäß dem in einem der Ansprüche 1 bis 11 definierten Verfahren erhalten wird, umfasst.

14. Verfahren zur Herstellung eines Weins,
**dadurch gekennzeichnet, dass** die Schritte a) bis d) der Herstellung eines flüssigen Nahrungsmittelprodukts, wie in den Ansprüchen 1 bis 11 definiert, gefolgt werden von einem Schritt der alkoholischen Fermentation in einem flüssigen Medium des flüssigen Nahrungsmittelprodukts, das direkt nach dem Schritt d) oder nach ergänzenden Schritten der Klärung und/oder enzymatischen Inaktivierung erhalten wird.

## Claims

1. Method for preparing a liquid food product enriched with oligosaccharides and with polysaccharides, from berries, including the following successive steps:
(a) a step of heating the berries to a temperature ranging from 40°C to 100°C,
(b) a step of placing the berries in a vacuum at a pressure ranging from 10³ to 3.10⁴ Pa, wherein the step of placing the berries in the vacuum is performed immediately upon the completion of step (a),
(c) a step of macerating the berries by seedingthem with one or several pectolytic enzymes selected from the group consisting of endo-polygatacturonases, exo-polygalacturonases, β-galactosidases, rhamnogalacturonases, pectin-esterases, pectin-methyl esterases, and pectin lyases, at a temperature from 30°C to 65°C,
wherein the step of macerating (c) is performed over a time period of 10 minutes to 10 hours, in the absence of alcoholic fermentation,
(d) a final step of recovering the liquid food product,
wherein steps (a), (b), and (c) are performed prior to any pressing step of the berries and toany alcoholic fermentation of the latter.

2. Method according to claim 1 **characterized in that** in step (a), the heating of the berries is performed for a duration ranging from 1 minute to 30 minutes.

3. Method according to claims 1 or 2 **characterized in that** in step (a), the berries are heated using a technique selected from the group consisting of (i) indirectly heating the berries using a heat exchanger, (ii) heating the berries by immersing them in a hot liquid, preferably a must (iii) heating the berries using a vapor flux, (iv) ohmic-heating the berries, and (v) microwave-heating the berries.

4. Method according to any one of claims 1 to 3 **characterized in that** in step (b), in which the berries are placed in a vacuum, the berries are cooled to an appropriate temperature for implementing enzymatic maceration of step (c).

5. Method according to any one of claims 1 to 4 **characterized in that** in maceration step (c), the pectolytic enzyme(s) is/are added to the berries: in the form of an enzymatic preparation with pectolytic primary activity obtained from a species of *Aspergillus.*

6. Method according to any one of claims 1 to 5 **characterized in that** the vapors emitted by the berries during step (b) are condensed and reincorporated into the berries during any of the steps of the method.

7. Method according to any one of claims 1 to 5 **characterized in that** the vapors emitted by the berries during step (b) are condensed and discharged.

8. Method according to one of claims 1 to 7 **characterized in that** the berries are first destemmed and/or drained and/or partially or entirely crushed before heating step (a) is implemented..

9. Method according to one of claims 1 to 8 **characterized in that** maceration step (c) is followed by a step of pressing the berries.

10. Method according to claim 9 **characterized in that** maceration step (c) is performed in the pressing chamber before implementation of pressing step.

11. Method according to one of claims 1 to 10 **characterized in that** the berries are grape berries.

12. Liquid food product enriched with polysaccharides and with oligosaccharides, prepared from berries by the method according to any one of claim 1 to 11, **characterized in that** it includes:
- oligosaccharide content level that is at least equal to 1.2 times, preferably 15 times, that of a reference product, and
- polysaccharide content level that is at least equal to 1.2 times, preferably 1.5 times, that of a reference product,
said reference product being prepared by a method which is similar to the preparation method which is implemented to obtain the liquid food product but which does not include the enzymatic maceration step (c),
which liquid food product has an alcohol content of less than 0.5% vol.

13. Method for preparing a wine, preferably a red wine, **characterized in that** it includes a liquid-phase winemaking step, with alcoholic fermentation, of a liquid food product as defined in claim 12 or of a liquid food, product obtained by the method according to any one of claims 1 to 11.

14. Method for preparing a wine, **characterized in that** the steps (a) to (d) of preparing a liquid food, product as defined in claims 1 to 11 are followed by a liquid phase alcoholic fermentation step of said liquid food product: obtained directly after step (d) or after additional steps of clarification and/or enzymatic inactivation.
